**Europäisches Patentamt**

**European Patent Office**

**Office européen des brevets**

(19)

(11) Veröffentlichungsnummer: **0 131 604**
**B1**

(12) # EUROPÄISCHE PATENTSCHRIFT

(45) Veröffentlichungstag der Patentschrift:
**22.04.87**

(21) Anmeldenummer: **84900499.9**

(22) Anmeldetag: **16.01.84**

(86) Internationale Anmeldenummer:
**PCT/DE 84/00012**

(87) Internationale Veröffentlichungsnummer:
**WO 84/02811 (19.07.84 Gazette 84/17)**

(51) Int. Cl.⁴: **H 02 N 11/00** // G09F19/02,
A63H33/26, G04B17/02

(54) **PENDELVORRICHTUNG.**

(30) Priorität: **15.01.83 DE 3301222**

(43) Veröffentlichungstag der Anmeldung:
**23.01.85 Patentblatt 85/4**

(45) Bekanntmachung des Hinweises auf die Patenterteilung:
**22.04.87 Patentblatt 87/17**

(84) Benannte Vertragsstaaten:
**AT CH FR GB LI**

(56) Entgegenhaltungen:
**DE - A - 2 029 553**
**DE - A - 2 812 473**
**FR - A - 2 111 093**
**US - A - 3 703 653**

(73) Patentinhaber: **Sánchez Giraldez, José Humberto, Am Rathenaupark 3, D-2000 Hamburg 50 (DE)**

(72) Erfinder: **Sánchez Giraldez, José Humberto, Am Rathenaupark 3, D-2000 Hamburg 50 (DE)**

(74) Vertreter: **Patentanwälte Dipl.-Ing. J. Richter Dipl.-Ing. F. Werdermann, Neuer Wall 10, D-2000 Hamburg 36 (DE)**

ACTORUM AG

### Beschreibung

Die Pendelvorrichtung nach der Erfindung ist überall da anwendbar, wo eine zu Beginn des Betriebs oder eines Betriebsabschnitts zugeführte Anfangsenergie auf eine möglichst grosse Zahl nacheinander folgender Arbeitshübe verteilt werden soll, was nicht ausschliesst, dass bereits vor vollständigem Verbrauch der Energiemenge ein neuer Kraftimpuls zugeführt wird. Eine Pendelvorrichtung gemäss der Erfindung ist anwendbar als Spielzeug (Mobile) oder beispielsweise als Blickfang in Schaufenstern. Eine andere Anwendungsmöglichkeit ist die Verwendung als Unruhe für Uhren.

Es wird von der Annahme ausgegangen, dass Pendelvorrichtungen mit einem Ständer, an dem mehr als eine Wippe gelagert ist, bereits bekannt sind. Bei solchen bekannten Pendelvorrichtungen wird anfänglich eine verhältnismässige kleine Energiemenge zugeführt, die sich nach wenigen Hüben der Wippe bzw. der Wippen rasch verbraucht.

Der Erfindung liegt die Aufgabe zugrunde, eine Pendelvorrichtung der in Rede stehenden Art durch abwechselnden Energieaustausch zwischen Speichern verschiedener Energiearten so auszubilden, dass die zum Ingangsetzen des Betriebs der Vorrichtung aufgewandte Energiemenge möglichst langsam verbraucht wird. Dies soll insbesondere durch einen zyklisch nacheinander erfolgenden Austausch zwischen magnetischer Energie, potentieller mechanischer Energie und kinetischer Energie ermöglicht werden.

Diese Aufgabe wird erfindungsgemäss durch die im Anspruch 1 enthaltenen Merkmale gelöst.

Durch den gegenseitigen Austausch verschiedener Energiearten in einer solchen Vorrichtung wird erreicht, dass eine verhältnismässig grosse Energiemenge über eine lang dauernde Folge von Pendelhüben nahezu unvermindert erhalten bleibt und dass diese Folge im Bedarfsfall durch zusätzliche Kraftimpulse, mit welchen eine etwa eingetretene Verminderung der Energiemenge weder ergänzbar ist noch verlängert werden kann.

Die auf der vierten Wippe bewegliche Masse, die die Anordnung aus zweiter und dritter Wippe in die beiden Endlagen bewegt, kann eine Kugel sein. Sie kann aber auch ein klotzartiger, sich linear bewegender Körper sein, der auf der Schrägfläche der ihm zugeordneten Wippe jeweils abwärts gleitet. Der sich linear bewegende klotzartige Körper kann aber auch auf leicht beweglichen Rollen längs der ihm zugeordneten Wippe geführt sein.

Eine weitere Möglichkeit besteht darin, dass der linear bewegliche Körper aus magnetischem Stoff besteht und sein Laufweg von einer Drahtspule umgeben ist, in der er bei seiner Bewegung einen elektrischen Impuls hervorruft, dessen elektrische Energie der Pendelvorrichtung im Takt ihrer Bewegungen stossweise zugeführt oder auf andere Weise verwendet werden kann.

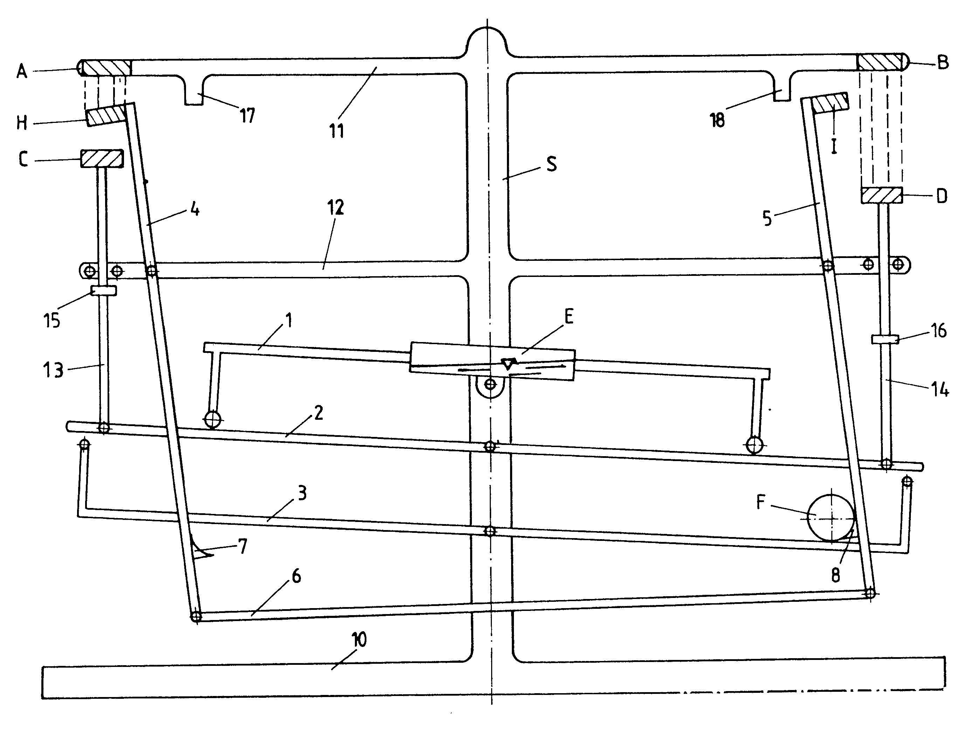

Weitere Möglichkeiten zur vorteilhaften weiteren Ausgestaltung der Erfindung werden nachstehend anhand des in der Zeichnung dargestellten Ausführungsbeispiels erläutert.

Die dargestellte Vorrichtung weist einen Ständer S mit einer Fussplatte 10 und Querbalken 11, 12 auf. An dem Ständer S sind mehrere Wippen 1, 2, 3, 4, 5 in leicht gängigen Drehlagern gelagert. Die Wippen 1, 2, 3 sind durch daran befestigte Stangen, an deren Enden sich Rollen befinden, so miteinander gekuppelt, dass sie synchrone oder annähernd synchrone Wippbewegungen ausführen. Die Wippen 4, 5 sind mittels einer an jeweils einen ihrer Enden über ein Gelenk angreifenden Stange 6 verbunden.

Der Querbalken 11 des Ständers S trägt an seinen beiden Enden je einen fest angeordneten Magneten A, B. Diesen gegenüber ist an den Enden jeweils einer mit der Wippe 2 gekuppelten Gelenkstange 13, 14 ein linear oder annähernd linear in Richtung auf einen der festen Magneten A, B und von ihm weg beweglicher Magnet C, D angeordnet. Die Stangen 13, 14 sind in je einer an den Enden des Querbalkens 12 befindlichen Öffnung linear oder annähernd linear geführt und in ihrer Bewegung zu dem Gegenmagneten durch einen Anschlag 15 bzw. 16 begrenzt. Bei den als Magnetpaare A, C bzw. B, D bezeichneten Anordnungen braucht jeweils nur ein aktiver Magnet, d. h. ein Dauermagnet oder Elektromagnet vorgesehen zu sein, hier beispielsweise der fest angeordnete Magnet A bzw. B, während anstelle des Gegenmagneten C bzw. D ein Weicheisenkörper vorgesehen sein kann. Es kann aber auch ein Rollentausch vorgenommen werden, derart, dass die unteren Teile C bzw. D aktive Magnete sind und die oberen Teile A bzw. B Weicheisenkörper.

Die Wippen 4, 5 tragen an ihren zu dem Gelenkpunkt der Stange 6 entgegengesetzten Ende je eine magnetische Blende H, I, die aus Weicheisen bestehen kann und das in der Zeichnung durch gestrichelte Linien angedeutete magnetische Feld abwechselnd entweder, wie links in der Zeichnung dargestellt, abschirmt, oder es, wie rechts in der Zeichnung dargestellt, freigibt. Ein Anschlag 17 bzw. 18 an dem Querbalken 11 dient zur Begrenzung der Freigabebewegung der Wippen 4, 5 mit den magnetischen Blenden H, I.

Eine bewegliche Masse F, hier in Form einer Kugel oder Walze, ist auf einer der Wippen 1, 2 oder 3, hier auf Wippe 3, als Rollbahn geführt, so dass sie sich auf der Schrägfläche der Wippe jeweils abwärts bewegen kann, bis sie gegen den Anschlag 7 bzw. 8 an einer der Wippen 4, 5 anstösst und das Wippen- und Gestängesystem 4, 5, 6 in seine entgegengesetzte Endlage treibt.

Ferner kann mit einer an dem Ständer S gelagerten Wippe, hier der Wippe 1, ein Behälter E für eine sich entsprechend der Wippbewegung verlagernde Flüssigkeit verbunden sein. Dadurch, dass mehr oder weniger Flüssigkeit in den Behälter E gefüllt wird, lassen sich die an der Pendelvorrichtung wirksamen Kräfte und ihr Zusammenwirken in solcher Weise beeinflussen, wie es für die gewünschte Arbeitsweise am günstigsten ist.

Die längs einer Wippe beweglich geführte Masse kann statt einer Kugel oder einer Walze F, wie bei dem in der Zeichnung dargestellten Ausführungsbeispiel vorgesehen, auch ein klotzartiger, sich linear längs der Wippe bewegender Körper, z. B. ein Gleitkörper, sein. Ein solcher sich linear bewegender klotzartiger Körper kann auch auf leicht beweglichen Rollen längs der ihm zugeordneten Wippe geführt sein.

Eine mögliche weitere Ausgestaltung der Vorrichtung besteht darin, dass ein solcher linear beweglicher Körper aus magnetischem Stoff besteht und seine Laufbahn von einer Drahtspule umgeben ist, in welcher er bei seiner Bewegung einen elektrischen Impuls hervorruft. Die so gewonnene elektrische Energie kann in an sich bekannter Weise in mechanische Energie umgewandelt und der Pendelvorrichtung im Takt ihrer Bewegungen stossweise zugeführt oder auf andere Weise verwendet werden.

Eine Anwendungsmöglichkeit einer Pendelvorrichtung gemäss der Erfindung ist die als Spielzeug (Mobile) oder beispielsweise als Blickfang in Schaufenstern. Eine andere Anwendungsmöglichkeit liegt in der Verwendung als Unruhe für Uhren. Hinsichtlich des Aufbaues und der Anordnung des Ständers, der Magneten und der Wippen- und Gestängesysteme sowie der Anwendungsmöglichkeiten bestehen auch noch andere von den hier dargestellten und beschriebenen Ausführungsformen abweichende Abwandlungsmöglichkeiten.

Insbesondere wird durch die Erfindung erreicht, dass die zum Ingangsetzen der Vorrichtung aufgewendete Energiemenge infolge des fortgesetzten Austausches zwischen magnetischer Energie, potentieller mechanischer Energie und kinetischer Energie sich auf eine grosse Zahl von Arbeitshüben verteilt. Solange die verfügbare Energiemenge noch nicht verbraucht ist, besteht die Möglichkeit, der Pendelvorrichtung auch – begrenzt fortlaufend – Energie zu entnehmen und damit eine andere Vorrichtung als Arbeitsmaschine zu betreiben. Solange dies geschieht, wirkt die Pendelvorrichtung als Kraftmaschine.

Eine Möglichkeit zur weiteren Verbesserung der erfindungsgemässen Vorrichtung besteht darin, dass zu beiden Seiten der die Führungsbahn der beweglichen Masse bildenden Wippe eine Verriegelungseinrichtung für die jeweilige Wippenhälfte angeordnet ist, welche das ihr zugeordnete Wippenende in seiner tiefsten Stellung festhält, bis sie beim Auftreffen der beweglichen Masse am jeweils tiefsten Punkt von deren Führungsbahn ausgelöst wird und die Bewegung der Wippe in der Gegenrichtung freigibt. Der aktive Magnet, welcher die Wippe in ihre Endstellung treibt, in der sie verklinkt wird, braucht also nicht ständig beansprucht zu werden. Es genügt, wenn er einen kurzen Kraftimpuls auf die Wippe ausübt. Das ist insbesondere von Wichtigkeit, wenn der aktive Magnet ein Elektromagnet ist, dessen jeweilige Erregungsdauer dann durch früheres Abschalten verkürzt werden kann.

**Patentansprüche**

1. Pendelvorrichtung mit einem Ständer (S), an dem mehrere Wippen (1, 2, 3, 4, 5) gelagert sind, dadurch gekennzeichnet, dass der Ständer (S) symmetrisch ausgebildet ist und zu beiden Seiten seiner Symmetrieachse je einen feststehenden Magneten (A, B) trägt, denen je ein beweglicher Magnet (C, D) zugeordnet ist, dass die beiden beweglichen Magneten (C, D) durch eine erste Wippe (2) und gelenkig mit dieser verbundene Stangen (13, 14) so miteinander gekuppelt sind, dass sie abwechselnd jeweils eine Lage in einem minimalen und in einem maximalen Abstand von den ihnen zugeordneten feststehenden Magneten (A, B) einnehmen, dass jedem Magnetpaar (A, C; B, D) eine magnetische Blende (H, I) zugeordnet ist, die bei minimalem Abstand quer zu dem Magnetfeld zwischen die Magnete jeden Paares hineinbeweglich ist, dass hierzu die beiden magnetischen Blenden (H, I) durch eine an dem Ständer gelagerte zweite und dritte Wippe (4, 5) und eine diese kuppelnde Verbindungsstange (6) so miteinander gekuppelt sind, dass abwechselnd die eine Blende (H) sperrend in das Magnetfeld des einen Magnetpaares (A, C) eingreift und die andere Blende (I) das Magnetfeld zwischen dem anderen Magnetpaar (B, D) freigibt und dass die den magnetischen Blenden (H, I) zugeordnete Anordnung aus zweiter und dritter Wippe (4, 5) durch eine auf der jeweiligen Schrägfläche einer vierten Wippe (3) sich jeweils abwärts bewegende, auf an der zweiten und dritten Wippe (4, 5) ausgebildete Anschläge (7, 8) auftreffende Masse (F) in ihre beiden Endlagen bewegt wird.

2. Vorrichtung nach Anspruch 1, dadurch gekennzeichnet, dass anstelle jeweils des einen der beiden paarweise einander zugeordneten, relativ zueinander beweglichen Magneten (A, C; B, D) ein Weicheisenkörper vorgesehen ist.

3. Vorrichtung nach Anspruch 1 oder 2, dadurch gekennzeichnet, dass die Masse (F) eine Kugel ist.

4. Vorrichtung nach Anspruch 1 oder 2, dadurch gekennzeichnet, dass die Masse (F) ein klotzartiger, sich linear bewegender Körper ist.

5. Vorrichtung nach Anspruch 4, dadurch gekennzeichnet, dass der klotzartige Körper auf leicht beweglichen Rollen längs der ihm zugeordneten Wippe geführt ist.

6. Vorrichtung nach einem der Ansprüche 4 oder 5, dadurch gekennzeichnet, dass der linear bewegliche Körper aus magnetischem Stoff besteht und sein Laufweg von einer Drahtspule umgeben ist, in der er bei seiner Bewegung einen elektrischen Impuls hervorruft.

7. Vorrichtung nach einem der Ansprüche 1 bis 6, dadurch gekennzeichnet, dass mit einer an dem Ständer (S) gelagerten sechsten Wippe (1) ein Behälter (E) für eine Flüssigkeit verbunden ist, der sich entsprechend der Wippbewegung verlagert.

8. Vorrichtung nach einem der Ansprüche 1 bis 7, dadurch gekennzeichnet, dass zu beiden Seiten der die Führungsbahn der beweglichen Masse (F) bildenden vierten Wippe (3) eine Verriegelungseinrichtung für die jeweilige Wippenhälfte angeordnet ist, welche das ihr zugeordnete Wippenende in seiner tiefsten Stellung festhält, bis sie beim Auftreffen der beweglichen Masse (F) am jeweils tiefsten Punkt von deren Führungsbahn ausgelöst wird und die Bewegung der Wippe in der Gegenrichtung freigibt.

**Revendications**

1. Dispositif à pendule avec un montant (S) sur lequel sont logées plusieurs bascules (1, 2, 3, 4, 5), caractérisé en ce que le montant (S) est formé de manière symétrique et qu'il porte des deux côtés de son axe de symétrie respectivement un aimant fixe (A, B) auquel correspond un aimant mobile respectif (C, D), que les deux aimants mobiles (C, D) sont connectés par une première bascule (2) et par des tiges (13, 14) reliées à celle-ci de manière articulée de façon à prendre à tour de rôle respectivement une position à un écart minimal et à un écart maximal par rapport aux aimants fixes (A, B) leur correspondant, qu'un écran magnétique (H, I) correspond à chaque paire d'aimants (A, C; B, D), écran magnétique qui, pour un écart minimal, est mobile entre les aimants de chaque paire transversalement par rapport au champ magnétique, que les deux écrans magnétiques (H, I) sont à cet effet connectés par une deuxième et une troisième bascule (4, 5) logée sur le montant et par une tige de raccordement (6) les reliant de telle manière qu'à tour de rôle l'un des écrans (H) s'engrène dans le champ magnétique de l'un des couples d'aimants (A, C) en le bloquant et que l'autre écran (I) débloque le champ magnétique entre l'autre paire d'aimants (B, D) et que le dispositif composé par la deuxième et la troisième bascule (4, 5) correspondant aux champs magnétiques (H, I) est déplacé dans ses deux positions extrêmes par une masse (F) se déplaçant vers le bas sur la surface respectivement en biais d'une quatrième bascule (3) et portant son impact sur des butées (7, 8) formées sur la deuxième et la troisième bascule (4, 5).

2. Dispositif selon la revendication 1, caractérisé en ce qu'un corps en fer doux est prévu à la place respective de l'un des deux aimants (A, C; B, D) correspondant l'un à l'autre de manière jumelée et mobile relativement l'un par rapport à l'autre.

3. Dispositif selon la revendication 1 ou 2, caractérisé en ce que la masse (F) est une boule.

4. Dispositif selon la revendication 1 ou 2, caractérisé en ce que la masse (F) est un corps du type gros bloc se déplaçant linéairement.

5. Dispositif selon la revendication 4, caractérisé en ce que le corps du type gros bloc est guidé sur des poulies montées librement le long de la bascule lui correspondant.

6. Dispositif selon l'une des revendications 4 ou 5, caractérisé en ce que le corps mobile linéairement est constitué par un matériau magnétique et que son parcours est entouré par une bobine enroulée dans laquelle il provoque une impulsion électrique lors de son déplacement.

7. Dispositif selon l'une des revendications 1 à 6, caractérisé en ce qu'un réservoir (E) de liquide, qui se déplace selon le mouvement de bascule, est relié à la sixième bascule (1) logée sur le montant (S).

8. Dispositif selon l'une des revendications 1 à 7, caractérisé en ce qu'un dispositif de verrouillage pour la moitié de la bascule respective est placé des deux côtés de la quatrième bascule (3) formant la coulisse de la masse mobile (F), dispositif qui maintient l'extrémité de la bascule lui correspondant dans sa position la plus basse jusqu'au déclenchement lors de l'impact de la masse mobile (F) au point respectivement le plus bas de sa coulisse et jusqu'au relâchement du déplacement de la bascule dans le sens inverse.

**Claims**

1. Pendulum device with a stand (S) bearing several rockers (1, 2, 3, 4, 5), characterized in that the stand (S) is worked out symmetrically and has one firmly mounted magnet (A, B) on each side of its axis of symmetry, each of these magnets having one movable magnet (C, D) allocated to it, in that the two movable magnets (C, D) are connected with each other by means of a first rocker (2) and bars (13, 14) pivoted at the rocker (2) so that they are positioned at a minimum and a maximum distance alternately from the firmly mounted magnets (A, B) to which they are allocated,
in that each pair of magnets (A, C; B, D) has a magnetic screen (H, I) allocated to it, which, at a minimum distance across the magnetic field can be moved between the magnets of each pair into the magnetic field, in that, for this purpose, the two magnetic screens (H, I) are connected with one another through a second and a third rocker (4, 5) positioned to the stand and a connecting bar (6) connected to the said rockers, that the one screen (H) alternately catches into the magnetic field of the one pair of magnets (A, C) thus interrupting it and the other screen (I) releases the magnetic field between the other pair of magnets (B, D) and that the arrangement of a second and a third rocker (4, 5) allocated to the magnetic screens (H, I) is moved into its two final positions by a mass (F) moving respectively downwards on the respective inclined surface of a fourth rocker (3) an impacting on the stops (7, 8) arranged on the second and the third rocker (4, 5).

2. Device according to claim 1, characterized in that a soft iron body is provided instead of each one of the two magnets being positioned in pairs and movable in ralation to each other (A, C; B, D).

3. Device according to claim 1 or 2, characterized in that the mass (F) is a ball.

4. Device according to claims 1 or 2, characterized in that the mass (F) is a block shaped and linearly movable body.

5. Device according to claim 4, characterized in that the block shaped body is guided on easily movable rollers along the rocker allocated to it.

6. Device according to one of the claims 4 or 5, characterized in that the linearly movable body consists of a magnetic material and that its track is surrounded by a wire-wound coil in which it produces an electrical pulse when moving.

7. Device according to one of the claims 1 to 6, characterized in that a container (E) for a liquid is connected with a sixth rocker (1) positioned at the stand (S), this container (E) shifting according to the movement of the rocker.

8. Device according to one of the claims 1 to 7, characterized in that at both sides of the fourth rocker (3) forming the guide rail for the movable mass (F) a locking device is positioned for the respective half of the rocker, which holds the end of the rocker allocated to it in its lowest position until, at the moment of impact of the movable mass (F) at the respectively lowest point, it is disengaged from its guiding bar and releases the movement of the rocker in the opposite direction.

0 131 604